Europäisches Patentamt

(19) European Patent Office

Office européen des brevets

(11) Veröffentlichungsnummer: **0 084 628**
**B1**

(12) # EUROPÄISCHE PATENTSCHRIFT

(45) Veröffentlichungstag der Patentschrift:
01.04.87

(51) Int. Cl.⁴: **H 04 B 3/14, H 04 N 7/10**

(21) Anmeldenummer: **82111103.6**

(22) Anmeldetag: **01.12.82**

(54) Kabelentzerrerschaltung.

(30) Priorität: **05.12.81 DE 3148242**

(43) Veröffentlichungstag der Anmeldung:
**03.08.83 Patentblatt 83/31**

(45) Bekanntmachung des Hinweises auf die Patenterteilung:
**01.04.87 Patentblatt 87/14**

(84) Benannte Vertragsstaaten:
**DE FR GB NL**

(56) Entgegenhaltungen:
**DE - A - 2 603 153**
**DE - A - 3 040 877**
**FR - A - 2 332 650**
**US - A - 3 451 003**
**US - A - 3 715 691**
**US - A - 3 798 576**
**US - A - 4 125 899**
**US - A - 4 151 490**

(73) Patentinhaber: **ROBERT BOSCH GMBH,
Robert-Bosch-Strasse 7 Postfach 429,
D-6100 Darmstadt (DE)**

(72) Erfinder: **Hoppe, Karl-Heinz, Römergasse 12,
D-6101 Wixhausen (DE)**

(74) Vertreter: **Gornott, Dietmar, Dipl.-Ing., c/o
Robert-Bosch GmbH
Postfach 429 Robert-Bosch-Strasse 7,
D-6100 Darmstadt (DE)**

## Beschreibung

Stand der Technik

Die Erfindung geht aus von einer Kabelentzerrerschaltung nach der Gattung des Hauptanspruchs.

Wird ein Signal, z. B. ein Videosignal, über eine Kabelleitung übertragen, so wird das Signal durch die Leitungsdämpfer gedämpft. Die Leitungsdämpfung steigt mit zunehmender Frequenz des Signals und ist vom Kabeltyp abhängig. Daher wird das über eine Leitung übertragene Signal in seinem Frequenzgang verzerrt und kann für eine weitere Verarbeitung unbrauchbar werden. Um das verzerrte Signal verarbeiten zu können, muss die Kabeldämpfung durch eine geeignete Kabelentzerrerschaltung, welche einen Verstärkungsverlauf entgegengesetzt der Kabeldämpfung besitzt, kompensiert werden.

Aus der US-A-4 151 490 ist bereits eine automatische Kabelentzerrerschaltung bekannt, bei welcher zur Kompensation der durch verschiedene Kabellängen hervorgerufenen unterschiedlichen Verzerrungen zu dem verzerrten Videosignal in Abhängigkeit eines Referenzsignals ein geeignetes Korrektursignal hinzugefügt wird. Diese bekannte Schaltung hat den Nachteil, dass sie nicht für jede Kabellänge optimal abgleichbar ist, d.h. es bleibt immer ein Restfehler, da von einem Maximalwert ausgegangen wird und die Zwischenwerte über einen Multiplizierer gewonnen werden. Ausserdem neigt diese Schaltung wegen des frequenz- und phasenabhängig rückgekoppelten Ausgangsverstärkers leicht zum Schwingen und Überschwingen. Ferner ist der Prüf- und Abgleichaufwand bei dieser Art des Entzerrer-Netzwerks relativ gross.

Der vorliegenden Erfindung liegt daher die Aufgabe zugrunde, eine Kabelentzerrerschaltung anzugeben, mit welcher die Dämpfung jeder beliebigen Kabellänge (bis ca. 800 m) optimal kompensiert werden kann.

Vorteile der Erfindung

Die erfindungsgemässe Kabelentzerrerschaltung mit den kennzeichnenden Merkmalen des Hauptanspruchs hat den Vorteil, dass eine automatische Entzerrung für jede beliebige Kabellänge optimal möglich ist. Die einmal erfassten Daten der Entzerrerstufen werden in dem programmierbaren Speicher abgespeichert, und dieser Speicherinhalt kann beliebig oft vervielfältigt werden, so dass praktisch die gesamte Prüf- und Abgleicharbeit entfallen kann.

Durch die in den Unteransprüchen aufgeführten Massnahmen sind vorteilhafte Weiterbildungen und Verbesserungen der im Hauptanspruch angegebenen Kabelentzerrerschaltung möglich.

Zeichnung

Ein Ausführungsbeispiel der Erfindung ist in der Zeichnung dargestellt und in der nachfolgenden Beschreibung näher erläutert. Es zeigen:

Fig. 1 ein Blockschaltbild der erfindungsgemässen Kabelentzerrerschaltung,

Fig. 2 ein Detailschaltbild einer Entzerrerstufe,

Fig. 3 ein Blockschaltbild eines Kabellängendetektors,

Fig. 4 Impulsdiagramme der im Kabellängendetektor verarbeiteten Signale.

Beschreibung des Ausführungsbeispiels

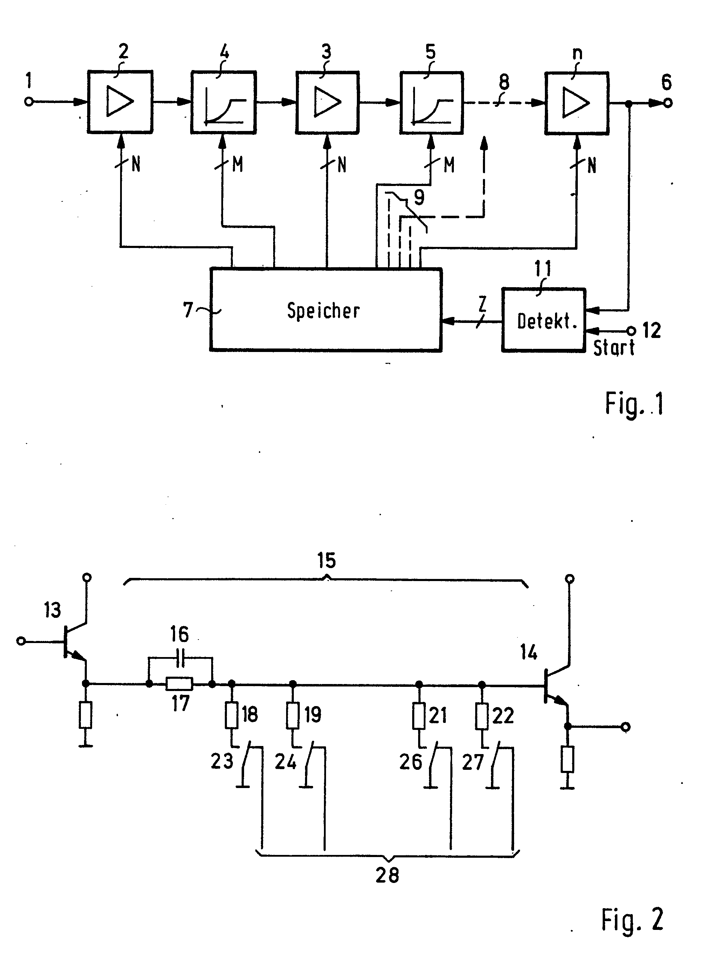

Bei dem Blockschaltbild gemäss Fig. 1 liegt an Klemme 1 das über ein (in der Zeichnung nicht dargestelltes) Kabel übertragene und dadurch gedämpfte und im Frequenzgang verzerrte Videosignal, welches durch die folgenden Verstärker 2, 3, . . . n und Entzerrerstufen 4, 5, . . . entzerrt werden soll. An der Ausgangsklemme 6 ist dann ein entzerrtes Videosignal abnehmbar. Der Verstärker 2 kompensiert dabei die maximale Dämpfung der nachgeschalteten passiven Entzerrerstufen 4 und gegebenenfalls einen Teil der Kabel-Grunddämpfung.

Um eine im Verlauf komplizierte Entzerrerkurve zu erzeugen, sind im allgemeinen mehrere Entzerrerstufen 4, 5, . . . notwendig. Die in Reihe geschalteten Entzerrerstufen 4, 5, . . . sind über je einen Trennverstärker 3, . . . n entkoppelt. Jede Entzerrerstufe 4, 5, . . . bildet hierbei einen Hochpass mit jeweils einer gegenüber der nachfolgenden Stufe unterschiedlichen Eckfrequenz $f_e$ (z. B. Stufe 4: $f_e$ = 5 MHz, Stufe 5: $f_e$ = 400 kHz usw.), bis zu welcher das zu übertragende Signal in der Amplitude mehr oder weniger gemäss einer e-Funktion gedämpft wird. Der jeweils vor einer Entzerrerstufe liegende Verstärker gleicht diese Dämpfung des Signals wieder aus, so dass dadurch das Signal praktisch ab der jeweiligen Eckfrequenz $f_e$ amplitudenmässig angehoben wird. Der gesamte Frequenzgang der Entzerrerstufen 4, 5, . . . und der Verstärker 2, 3, . . . n soll dadurch der gewünschten Entzerrerkurve entsprechen. Die Kabeldämpfung in Dezibel verhält sich proportional zur Kabellänge. Um nun bei variabler Kabellänge die dazugehörende Entzerrerkurve zu erhalten, müssen die einzelnen Entzerrerstufen 4, 5, . . . ebenfalls variabel sein. Aus diesem Grunde ergibt sich eine Vielzahl von Parametern, welche die einzelnen Verstärkerstufen 2, 3, . . . n und Entzerrerstufen 4, 5, . . . ansteuern müssen. Diese Vielzahl von Daten wird für verschiedene Kabellängen einmalig erfasst und in einem programmierbaren Datenspeicher 7 (z. B. PROM) abgespeichert. Die Einstellung der Verstärker 2, 3, . . . n erfolgt dann vom Speicher 7 durch digitale Steuerung mit z. B. N = 4 bit und die der Entzerrerstufe 4, 5, . . . mit z. B. M = 6 bit.

Da zur Erzeugung einer optimalen Entzerrerkurve weitere Verstärker- und Entzerrerstufen, wie durch die gestrichelte Linie 8 angedeutet ist, vorgesehen werden können, sind dafür natürlich auch weitere, in der Zeichnung ebenfalls gestrichelt dargestellte digitale Ansteuerleitungen 9 notwendig.

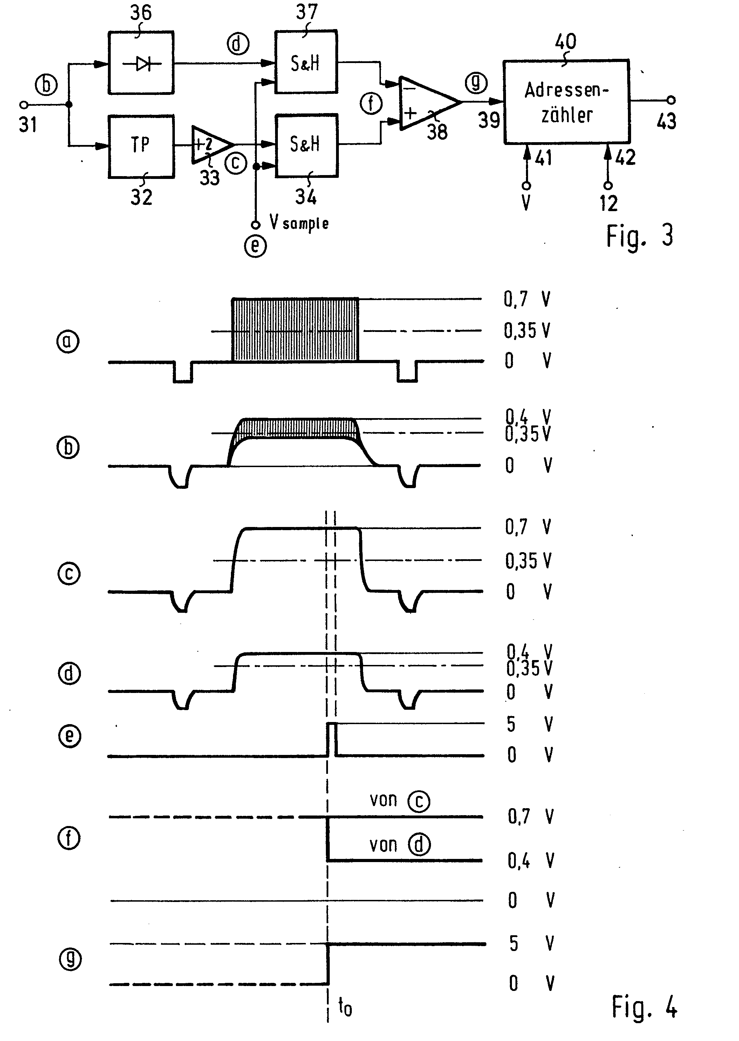

Die automatische Erfassung der Kabellänge erfolgt durch einen am Ausgang 6 angeschlossenen Kabellängendetektor 11, welcher die entsprechende Adresse für den Speicher 7 erzeugt. Zur automatischen Einstellung der erfindungsgemässen Kabelentzerrerschaltung für ein an Klemme 1 angeschlossenes beliebiges Kabel braucht nun lediglich ein entsprechendes Testsignal (siehe z.B. Fig. 4a) in das Kabel eingespeist und ein Startimpuls an Klemme 12 des Kabellängendetektors 11 angelegt zu werden.

Da der Kabellängendetektor 11 am Ausgang 6 angeschlossen ist, lässt sich somit der gesamte Übertragungskanal, also einschliesslich der Kabelentzerrerschaltung, erfassen, wodurch die Entzerrerkurve optimal einstellbar ist.

Die in Fig. 2 detailliert dargestellte Entzerrerstufe enthält zwischen den am Eingang und Ausgang jeweils eingeschalteten Impedanzwandlern 13 und 14 ein RC-Netzwerk 15, bestehend aus einem RC-Längsglied 16, 17 und mehreren R-Quergliedern 18 bis 22, welche über Schalter 23 bis 27 mit Bezugspotential verbindbar sind. Die Schalter 23 bis 27 werden vom Speicher 7 je nach angeschlossener Kabellänge über die Leitungen 28 gesteuert. Dabei wird mit dem RC-Glied 16, 17 die Eckfrequenz $f_e$ festgelegt, und durch Verändern der Querwiderstände 18 bis 22 kann der Dämpfungsanstieg der jeweiligen Entzerrerkurve variiert werden. Dieses Verändern erfolgt durch das Zu- und Abschalten der Widerstände 18 bis 22 mittels der Schalter 23 bis 27.

Bei dem in Fig. 3 dargestellten Kabellängendetektor ist die Eingangsklemme 31 mit dem Ausgang 6 (siehe Fig. 1) verbunden. Nach der Eingangsklemme 31 verzweigt sich der Signalweg in zwei parallele Zweige, von denen der eine ein Tiefpassglied 32, einen Verstärker 33 und eine erste S&H-Schaltung 34 und der andere eine Spitzenwert-Gleichrichterschaltung 36 und eine zweite S&H-Schaltung 37 in Reihe enthält. Die S&H-Schaltungen 34 und 37 werden mit V-frequenten Sample-Impulsen angesteuert. Der Ausgang der S&H-Schaltung 34 ist mit dem positiven Eingang und der Ausgang der S&H-Schaltung 37 mit dem negativen Eingang eines Komparators 38 verbunden. Der Ausgang des Komparators 38 ist an den Sperreingang 39 eines Adressenzählers 40 angeschlossen. Ferner werden diesem Adressenzähler 40 am Takteingang 41 V-Synchron-Impulse zugeführt, während am Rücksetzeingang 42 der Startimpuls anliegt. Am Ausgang 43 des Zählers 40 ist dann das Adressensignal für den (in Fig. 1 dargestellten) Speicher 7 abnehmbar.

Die Funktion dieses Kabellängendetektors soll nunmehr im Zusammenhang mit den Impulsdiagrammen gemäss Fig. 4 näher erläutert werden. In Fig. 4a ist ein Testsignal dargestellt, welches aus einem in der V-Lücke eines Videosignals eingesetzten unmodulierten HF-Signal besteht. Dieses Signal wird dem Kabel zugeführt und aufgrund der Kabeldämpfung in ein Signal gemäss Fig. 4b verändert. Dieses in seiner hochfrequenten Amplitude verkleinerte Signal liegt an der Klemme 31 an und wird in den zwei parallelen Zweigen weiterverarbeitet.

Im ersten Zweig wird es über den Tiefpass 32 geführt und von der hochfrequenten Restamplitude befreit. Danach wird es im Verstärker 33 um den Faktor 2 verstärkt, so dass am Ausgang des Verstärkers 33 ein Signal gemäss Fig. 4c abnehmbar ist. Gleichzeitig wird das Signal gemäss Fig. 4b dem Spitzenwertgleichrichter 36 zugeführt, an dessen Ausgang ein Signal gemäss Fig. 4d abnehmbar ist. Dieses Signal wird der S&H-Schaltung 37 und das Signal gemäss Fig. 4c der S&H-Schaltung 34 zugeführt, welche mit V-frequenten Sample-Impulsen gemäss Fig. 4e abgetastet werden, wobei im Zeitpunkt $t_o$ das automatische Kompensationsverfahren abzulaufen beginnt.

Die Ausgangssignale der Schaltungen 34 und 37 gemäss Fig. 4f, wobei das niederfrequente Signal gemäss Fig. 4c die Referenz zum hochfrequenten Signal gemäss Fig. 4d bildet, werden im Komparator 38 verglichen und als Ausgangsspannung gemäss Fig. 4g dem Adressenzähler 40 zugeführt.

Bei Gleichheit dieser beiden Ausgangssignale wechselt der Pegel des Ausgangssignals des Komparators 38 auf 0 V. Der Adressenzähler 40 wird angehalten, d. h. die Adresse für die richtigen Daten im Speicher 7 ist gefunden und der Kabellängenentzerrer ist optimal ausgeglichen.

Nach einem Kabelwechsel wird der Adressenzähler 40 durch Start des Kabellängendetektors 11 auf Null gesetzt und danach so lange mit V-Impulsen getaktet bis mit Hilfe des Komparators 38, wie oben erläutert, Gleichheit der beiden Signale c und d festgestellt wird.

**Patentansprüche**

1. Kabelentzerrerschaltung für die automatische Kompensation von über ein Kabel übertragene, in ihrem Amplituden- und Frequenzgang verzerrte Videosignale, mittels eines automatischen Kabellängendetektors (11), dadurch gekennzeichnet, dass am Ausgang des Kabels im Videosignalweg mehrere einstellbare passive Entzerrerstufen (4, 5) abwechselnd mit je einem einstellbaren Trennverstärker (2, 3) in Reihe geschaltet sind, dass die Entzerrerstufen und Trennverstärker von einem programmierbaren Speicher (7) digital ansteuerbar sind und dass der programmierbare Speicher vom Ausgang der Kabelentzerrerschaltung über den automatischen Kabellängendetektor (11) adressierbar ist.

2. Kabelentzerrerschaltung nach Anspruch 1, dadurch gekennzeichnet, dass jede Entzerrerstufe (4, 5) aus einem Hochpass mit unterschiedlicher Eckfrequenz besteht.

3. Kabelentzerrerschaltung nach Anspruch 2, dadurch gekennzeichnet, dass jeder Hochpass aus einem RC-Längsglied (16, 17) und mehreren anschaltbaren R-Quergliedern (18 bis 22) besteht.

4. Kabelentzerrerschaltung nach Anspruch 1, dadurch gekennzeichnet, dass für die Adressierung des programmierbaren Speichers (7) dem Kabellängendetektor (11) als Bezugssignal ein an geeigneter Stelle, insbesondere in der V-Lücke des Videosignals eingesetztes unmoduliertes HF-Signal dient.

5. Kabelentzerrerschaltung nach Anspruch 4, dadurch gekennzeichnet, dass der Kabellängendetektor (11) einen Adressenzähler (40) enthält, an dessen Sperreingang (39) ein vom Bezugssignal nach Vergleich dessen hochfrequenter mit dessen niederfrequenter Komponente abgeleitetes Steuersignal liegt, an dessen Takteingang (41) ein V-frequentes Impulssignal liegt, dessen Rücksetzeingang (42) ein Startimpuls zuführbar ist und dessen Ausgang (43) mit dem Adresseneingang des programmierbaren Speichers (7) verbunden ist.

6. Kabelentzerrerschaltung nach Anspruch 5, dadurch gekennzeichnet, dass zur Durchführung des Vergleiches das Bezugssignal in einem ersten Zweig über einen Tiefpass (32) einer ersten S&H-Schaltung (34) und in einem zweiten dazu parallelen Zweig über eine Spitzenwertgleichrichterschaltung (36) einer zweiten S&H-Schaltung (37) zugeführt ist, und dass die Ausgänge der beiden S&H-Schaltungen an je einen Eingang eines Komparators (38) angeschlossen sind, dessen Ausgang mit dem Sperreingang (39) des Adressenzählers (40) verbunden ist.

## Claims

1. Cable equalizer for the automatic compensation of video signals transmitted via a cable and having a distorted amplitude-frequency characteristic, by means of an automatic cable length detector (11), characterized in that a plurality of adjustable, passive equalizer stages (4, 5) are connected in series in alternating manner with in each case one adjustable isolating amplifier (2, 3) in the video signal path at the cable output, that the equalizer stages and isolating amplifiers are digitally controlled by a programmable memory (7) and that the programmable memory is addressable from the output of the cable equalizer by means of the automatic cable length detector (11).

2. Cable equalizer according to claim 1, characterized in that each equalizer stage (4, 5) comprises a high-pass filter with different cutoff frequency.

3. Cable equalizer according to claim 2, characterized in that each high-pass filter comprises a RC-longitudinal network (16, 17) and a plurality of connectable R-transverse networks (18 to 22).

4. Cable equalizer according to claim 1, characterized in that for addressing the programmable memory (7), the cable length detector (11) uses as the reference signal an unmodulated HF signal used at an appropriate point, particularly in the V-gap of the video signal.

5. Cable equalizer according to claim 4, characterized in that the cable length detector (11) contains an address counter (40), at whose inhibit input (39) there is a control signal derived from the reference signal following comparison of its high frequency component with its low frequency component and at whose clock input (41) there is a V-frequency pulse signal, whose resetting input (42) can be supplied with a starting pulse and whose output (43) is connected to the address input of the programmable memory (7).

6. Cable equalizer according to claim 5, characterized in that for performing the comparison the reference signal is supplied in a first branch via a low-pass filter (32) to a first S & H circuit (34) and in a second branch parallel thereto via a peak value rectifier circuit (36) to a second S & H circuit (37) and that the outputs of the two S & H circuits are in each case connected to one input of a comparator (38), whose output is connected to the inhibit input (39) of address counter (40).

## Revendications

1. Circuit de correction de câble pour la compensation automatique de signaux vidéo transmis par l'intermédiaire d'un câble et déformés en amplitude et en fréquence, au moyen d'un détecteur automatique de longueur de câble (11), ciruit caractérisé en ce qu'à la sortie du câble sur le trajet du signal vidéo, plusieurs étages passifs de correction réglables (4, 5) sont alternativement branchés en série avec respectivement un amplificateur de séparation réglable (2, 3), ces étages de correction et les amplificateurs de séparation étant commandés numériquement par une mémoire programmable (7), et cette mémoire programmable étant susceptible d'être adressée à partir de la sortie du circuit de correction de câble par l'intermédiaire du détecteur automatique de longueur de câble (11).

2. Circuit de correction de câble selon la revendication 1, caractérisé en ce que chaque étage de correction (4, 5) est constitué d'un filtre passehaut avec une fréquence limite différente.

3. Circuit de correction de câble selon la revendication 2, caractérisé en ce que chaque filtre passe-haut est constitué d'un organe longitudinal RC (16, 17) et de plusieurs organes transversaux R susceptibles d'être connectés (18 à 22).

4. Circuit de correction de câble selon la revendication 1, caractérisé en ce que pour l'adressage de la mémoire programmable (7) au détecteur de longueur de câble (11) est utilisé comme signal de référence, un signal HF non modulé, inséré à un emplacement approprié, notamment dans l'intervalle V du signal vidéo.

5. Circuit de correction de câble selon la revendication 4, caractérisé en ce que le détecteur de longueur de câble (11) comprend un compteur d'adressage (40) à l'entrée de blocage (39) duquel s'applique un signal de commande dérivé du signal de référence après comparaison de la composante haute fréquence de celui-ci avec sa composante basse fréquence, tandis qu'à son entrée de synchronisation (41) s'applique un signal pulsé de fréquence V, que l'impulsion de démarrage est susceptible d'être appliquée à son entrée de remise à l'état initial (42) et que sa sortie (43) est reliée à l'entrée d'adressage de la mémoire programmable (7).

6. Circuit de correction de câble selon la revendication 5, caractérisé en ce que pour la mise en œuvre de la comparaison, le signal de référence est appliqué, dans une première branche de dérivation, par l'intermédiaire d'un filtre passe-bas (32) à un premier circuit S et H (34) et, dans une seconde branche de dérivation parallèle, par l'intermédiaire d'un circuit de redressement de valeur de pointe (36) à un second circuit S et H (37) et que les sorties des deux circuits S et H sont chacune raccordées à une entrée d'un comparateur (38) dont la sortie est reliée à l'entrée de blocage (39) du compteur d'adressage (40).

Fig. 1

Fig. 2

0 084 628

Fig. 3

Fig. 4

9